# EUROPEAN PATENT SPECIFICATION

(11) **EP 4 159 136 B1**
(45) Date of publication and mention of the grant of the patent: **05.08.2026**
(21) Application number: 21814608.2
(22) Date of filing: 25.05.2021
(51) Int. Cl.: G01N 23/046

(54) **SUPPORT STAND AND CT INSPECTION APPARATUS**
STÜTZSTÄNDER UND CT-INSPEKTIONSVORRICHTUNG
SUPPORT ET APPAREIL D'INSPECTION PAR TOMODENSITOMÉTRIE

(30) Priority: 29.05.2020 CN 202010472922
(43) Date of publication of application: 05.04.2023
(73) Proprietor: Tsinghua University, Beijing 100084 (CN); Nuctech Company Limited, TongFang Building Shuangqinglu Haidian District Beijing 100084 (CN)
(72) Inventor: ZHANG, Li, Beijing 100084 (CN); CHEN, Zhiqiang, Beijing 100084 (CN); HONG, Mingzhi, Beijing 100084 (CN); WANG, Zinan, Beijing 100084 (CN); HUANG, Qingping, Beijing 100084 (CN); ZHANG, Liguo, Beijing 100084 (CN)
(74) Representative: Gunzelmann, Rainer
(86) International application number: PCT/CN2021/095751
(87) International publication number: WO 2021/238905

(56) References cited:
- CN-A- 1 946 343
- CN-A- 104 490 414
- CN-A- 105 805 172
- CN-A- 105 805 172
- CN-A- 111 184 526
- CN-U- 201 693 367
- CN-U- 202 428 187
- CN-U- 203 576 528
- US-A1- 2014 219 422
- US-A1- 2014 314 200
- US-A1- 2017 325 764

## Description

### TECHNICAL FIELD

The present disclosure relates to a field of radiation detection, and in particular, to a support stand and a CT detection device including the support stand.

### BACKGROUND

In an existing CT detection device, a radiation source and a detector are installed on a rotating frame, and the rotating frame is installed on a support stand through a slip ring bearing and may rotate around its central axis so as to achieve a tomography. The support stand carries the rotating frame and components installed thereon, thus, the support stand is an important component of the CT detection device.

CN105805172A discloses a support frame for a CT slip ring bearing. The support frame includes a flat plate of a slip ring bracket main body, a bearing mounting hole used for mounting a bearing slip ring is formed in the center of the flat plate of the slip ring bracket main body, a bottom plate used for supporting the flat plate of the slip ring bracket main body is arranged at the bottom of the flat plate of the slip ring bracket main body, one circle of outer ring support plates perpendicular to the flat plate of the slip ring bracket main body are arranged at the periphery of the flat plate of the slip ring bracket main body, and the flat plate of the slip ring bracket main body is provided with one circle of inner ring support plates perpendicular to the flat plate of the slip ring bracket main body between the outer ring support plates and the bearing mounting hole. Through improving the structural form of the support frame, lower weight and sufficient rigidity and strength are realized, so that the vibration of rotating components is reduced.

CN111184526A discloses a CT scanning frame and a CT host. The CT scanning frame includes a support frame and a fixing system; the support frame includes a plane bearing and an auxiliary bearing, wherein the plane bearing is positioned under the support frame, and the auxiliary bearing is positioned on the support frame; the fixing system is connected between the plane bearing and the auxiliary bearing; and the fixing system rotates around an axis formed by the plane bearing and the auxiliary bearing in a certain angle range in the horizontal direction. According to the invention, the support of the fixing system is changed to the bottom surface of the base of the host; an auxiliary support structure is arranged on the scanning frame; a linear push rod is fixed between the base and the fixing system; and left-right inclination of the scanning frame is realized through extension of the push rod.

US2014314200A1 discloses a CT security inspection system for baggage. The CT security inspection system includes a scanning passage through which a baggage enters and exits the CT security inspection system for baggage, a X-ray source provided at one side of the scanning passage, and, a gantry provided at an opposite side of the scanning passage, and on which a plurality of detector units are mounted. In each of the detector units, a vertex point of at least one detector unit is positioned in a circular arc with its center at a center of the scanning passage, and the detector units are arranged successively. All the detector crystal receiving faces of the plurality of detector units are within a scope of radiating ray beams with its center at a target of the X-ray source. In each of the detector units, a connection line between a midpoint of at least one of the detector crystal receiving faces and the target of the X-ray source is normal to the corresponding detector crystal receiving face.

CN104490414A discloses a slip ring drive structure for CT (computed tomography). The slip ring drive structure includes a slip ring bracket, a slip ring, a first drive device, a second drive device and a transmission device, wherein the slip ring is rotatably fixed on the slip ring bracket; the transmission device is coaxially and fixedly connected with the slip ring; the first drive device and the second drive device are fixed on the slip ring bracket; the first drive device and the second drive device are in transmission connection with the transmission device; the driving directions of the first drive device and the second drive device are the same. The slip ring drive structure for CT can be used for greatly shortening the starting time of the slip ring, improving the starting speed of the slip ring of safety inspection CT, so that the package inspection time of the safety inspection CT is improved. After the slip ring is started, one motor stops electrifying, and the power of the other motor is relatively low, so that the rotary energy consumption of the slip ring of the safety inspection CT can be lowered.

### SUMMARY

The present disclosure provides an improved support stand and a CT detection device including the support stand, which may achieve a sufficient stiffness and strength with a low weight and may be beneficial to achieve a stability of the detection device.

According to an aspect of the present disclosure, a support stand configured to support a rotating frame of a CT detection device is provided, including: a main body portion including a bearing mounting hole, wherein a slip ring bearing of the CT detection device is arranged in the bearing mounting hole, and the rotating frame is rotatably disposed in the slip ring bearing; a pedestal located at a bottom portion of the main body portion and configured to support the main body portion; and a connecting portion, wherein a width of a lower portion of a cross section of the connecting portion is greater than a width of an upper portion of the cross section of the connecting portion, an upper portion of the connecting portion is connected to the main body portion, and a lower portion of the connecting portion is connected to the pedestal.

The cross section of the connecting portion is formed as a herringbone shape.

According to an exemplary embodiment of the present disclosure, the support stand further includes: a first support plate arranged on a periphery of the main body portion and extending outward in an axial direction of the main body portion; and a plurality of first reinforcing ribs, wherein one side of each first reinforcing rib is connected to a side surface of the first support plate, and the other side of each first reinforcing rib connected with the one side is connected to the main body portion.

According to an exemplary embodiment of the present disclosure, wherein the first support plate is disposed above the bearing mounting hole and formed as a semicircle shape, and wherein the plurality of first reinforcing ribs are uniformly arranged in a circumferential direction of the first support plate.

The support stand further includes a plurality of second reinforcing ribs, wherein each reinforcing rib extends downward from an outer edge of the bearing mounting hole to the pedestal via the bottom portion of the main body portion and the connecting portion.

According to an exemplary embodiment of the present disclosure, a plurality of third reinforcing ribs are disposed inside the pedestal, and the third reinforcing ribs are formed as a cross shape.

According to an exemplary embodiment of the present disclosure, the support stand is manufactured by an integral cast forming; or the main body portion and the pedestal are respectively manufactured as two separate parts, and the two parts are connected into one part.

According to another aspect of the present disclosure, a CT detection device is provided, including: a rotating frame provided with a radiation source and a detector; a slip ring bearing; and the support stand according to any one of the above-mentioned embodiments.

According to an exemplary embodiment of the present disclosure, the cross section of the connecting portion is formed as a herringbone shape, an inverted T shape or an inverted tree branch shape.

According to an exemplary embodiment of the present disclosure, the CT detection device further includes: at least one pedestal extension section assembled with the pedestal to jointly support the CT detection device.

Through the following descriptions of the present disclosure with reference to the accompanying drawings, other purposes and advantages of the present disclosure will be apparent, which is facilitate to a comprehensive understanding of the present disclosure.

### BRIEF DESCRIPTION OF THE DRAWINGS

FIG. 1 shows a perspective view of a CT detection device according to an embodiment of the present disclosure.
FIG. 2 shows a side view of the CT detection device shown in FIG. 1.
FIG. 3 shows a front view of the CT detection device shown in FIG. 1.
FIG. 4 shows a bottom view of the CT detection device shown in FIG. 1.
FIG. 5 shows a perspective view of a support stand according to an embodiment of the present disclosure.
FIG. 6 shows a front view of the support stand shown in FIG. 5.
FIG. 7 shows a bottom view of the support stand shown in FIG. 5.
FIG. 8 shows a cross-sectional view of a support stand according to a first embodiment of the present disclosure taken along a direction AA in FIG. 6.
FIG. 9 shows a cross-sectional view of a support stand according to a second embodiment of the present disclosure taken along a direction AA in FIG. 6.
FIG. 10 shows a cross-sectional view of a support stand according to a third embodiment of the present disclosure taken along a direction AA in FIG. 6.
FIG. 11 shows a perspective view of a detection channel according to an embodiment of the present disclosure.
FIG. 12 shows a front view of the detection channel shown in FIG. 11.
FIG. 13 shows a top view of the detection channel shown in FIG. 11.
FIG. 14 shows a side view of the detection channel shown in FIG. 11.
FIG. 15 shows a cross-sectional view of a material forming the detection channel shown in FIG. 11.

### Reference Numerals

100. CT detection device; 10. support stand; 11. main body portion; 12. bearing mounting hole; 13. pedestal; 14. connecting portion; 15. first support plate; 16. first reinforcing rib; 17. second reinforcing rib; 18. third reinforcing rib; 20. slip ring bearing; 30. rotating frame; 40. pedestal extension section; 50. detection channel; 50A. carbon fiber layer; 50B, aramid honeycomb paper layer; 50C, aramid layer; 51. base; 52. connecting surface; 53. annular member; 60. transmission channel; 70. channel component; 72. transmission belt channel.

### DETAILED DESCRIPTION OF EMBODIMENTS

Technical solutions of the present disclosure will be further described in detail below through embodiments in combination with the accompanying drawings. In the specification, the same or similar reference numerals indicate the same or similar components. The following descriptions of embodiments of the present disclosure with reference to the accompanying drawings are intended to explain the general inventive concept of the present disclosure, and should not be construed as limiting the present disclosure.

In addition, in the following detailed descriptions, for ease of explanation, many specific details are set forth to provide a comprehensive understanding of the embodiments of the present disclosure. However, it is obvious that one or more embodiments may also be implemented without the specific details. In other cases, well-known structures and devices are represented graphically to simplify the accompanying drawings.

In the embodiments of the present disclosure, with a continuous improvement of requirements for a passing rate of object detection, a speed of a rotor in a rotating frame is correspondingly accelerated; and with an increase of a volume of an object to be detected, a weight of the rotating frame becomes larger. Since a radiation source, a detector and other electronic apparatuses are installed on the rotating frame, and the apparatuses have certain weights and are unevenly distributed, a high-speed rotation and a frequent startup and shutdown of the rotor may inevitably lead to a vibration of the rotor. The vibration may not only affect an imaging quality, but may also be delivered to a support stand, which may cause an adverse effect on an overall stability of the detection device. Thus, a structural component including the support stand is required to have a high stiffness and strength. On the other hand, in order to improve a mobility and reduce a workload of installation and adjustment, etc., a reduction of a weight of the structural component such as the support stand or the like has also become an important demand in the art. Therefore, how to reduce the weight while ensuring the high strength and stiffness of the support stand is a technical problem to be solved urgently.

In the embodiments of the present disclosure, the support stand is used to support a slip ring bearing, the support stand is manufactured by processing after a steel plate welding, or is manufactured by processing after an integral cast forming with cast iron. After that, the support stand is generally fixed on a pedestal by screws. In this way, the pedestal interacts with the support stand so as to ensure that the rotating frame may rotate stably and reliably.

Although the above-mentioned embodiments may ensure a stability of the detection device to a certain extent, the above-mentioned embodiment may still have the following disadvantages: the support stand and the pedestal are in a split structure, and they may be connected only when high-precision mounting surfaces are respectively processed; in a case of manufacturing the support stand by using the steel plate welding, parts have a long processing cycle and a high manufacturing cost, and the support stand manufactured has a large weight, which are not beneficial to the stability of the detection device; in a case of manufacturing the support stand by using an integral casting, a connecting plane is also required to be processed.

For at least one aspect of the above-mentioned disadvantages, another embodiment of the present disclosure provides an improved solution. The embodiments of the present disclosure will be described in more detail below in combination with the accompanying drawings.

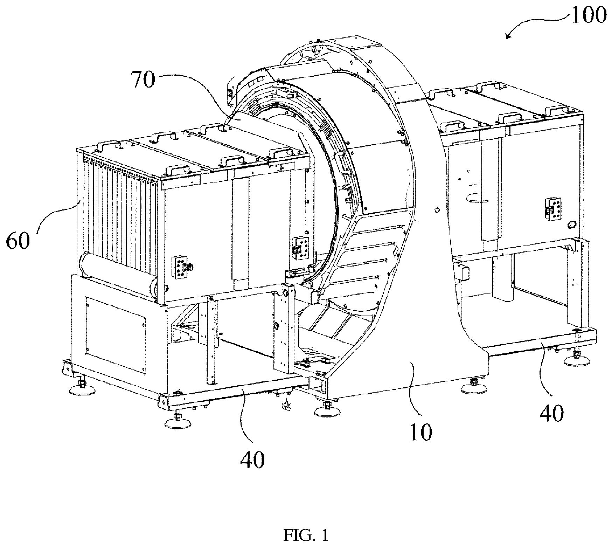

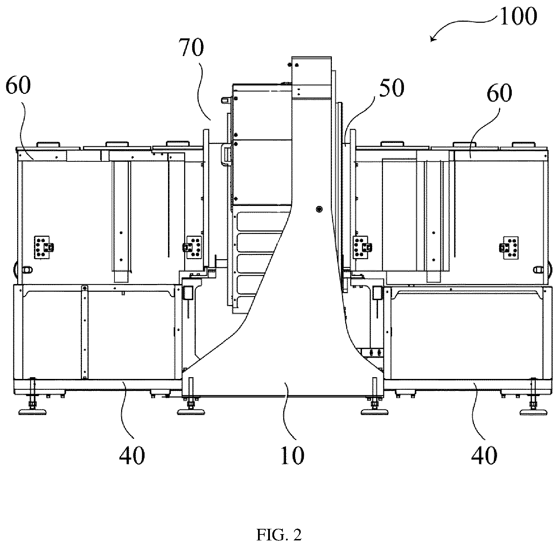

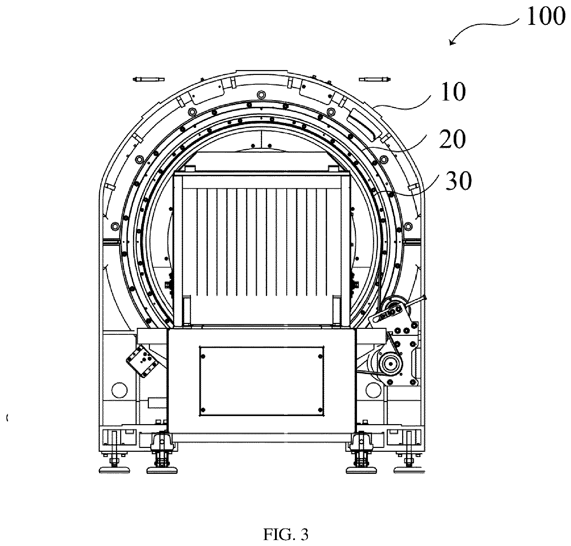

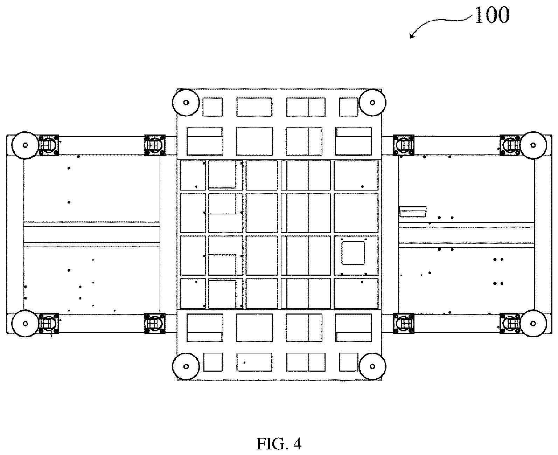

As shown in FIG. 1 to FIG. 4, the embodiments of the present disclosure provide a CT detection device 100, including a support stand 10, a slip ring bearing 20 and a rotating frame 30. The rotating frame 30 is provided with a radiation source and a detector, and may be rotatably disposed on the slip ring bearing 20.

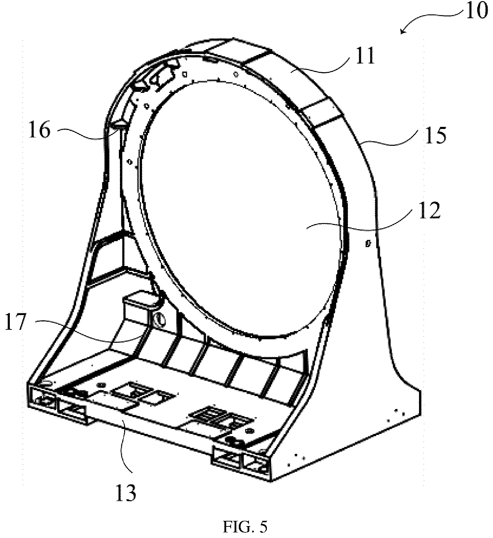

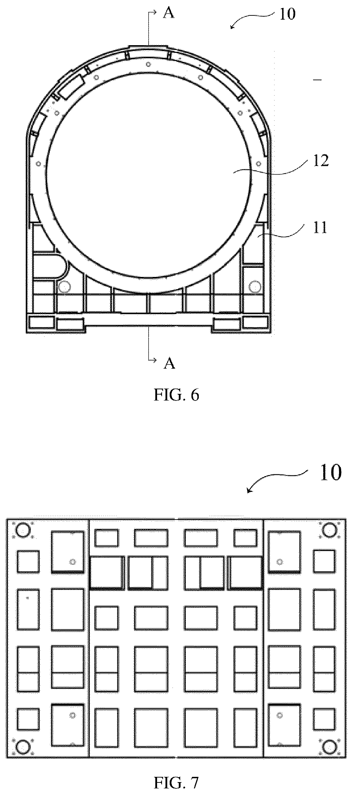

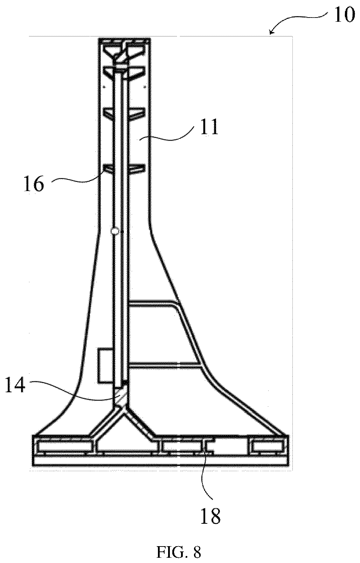

As shown in FIG. 5 to FIG. 10, the support stand 10 includes three components, specifically a main body portion 11, a pedestal 13 and a connecting portion 14. The main body 11 includes a bearing mounting hole 12, and the slip ring bearing 20 is arranged in the bearing mounting hole 12. The pedestal 13 is located at a bottom portion of the main body portion 11 and is configured to support the main body portion 11. A cross section of the connecting portion 14 taken along a direction parallel to a page surface in FIG. 8 includes an upper portion and a lower portion, and the lower portion of the cross section is wider than the upper portion of the cross section. An upper portion of the connecting portion 14 is connected to the main body portion 11, and a lower portion of the connecting portion 14 is connected to the pedestal 13. In such configuration, the support stand according to the embodiments of the present disclosure may achieve a sufficient stiffness and strength with a low weight, thereby a vibration of the rotating frame may be reduced.

In a first embodiment shown in FIG. 8, the cross section of the connecting portion 14 is formed as a herringbone shape, thereby reducing the weight of the support stand while providing sufficient strength and stiffness. The reduced weight may improve the mobility of the support stand and facilitate a process of installing and adjusting the support stand.

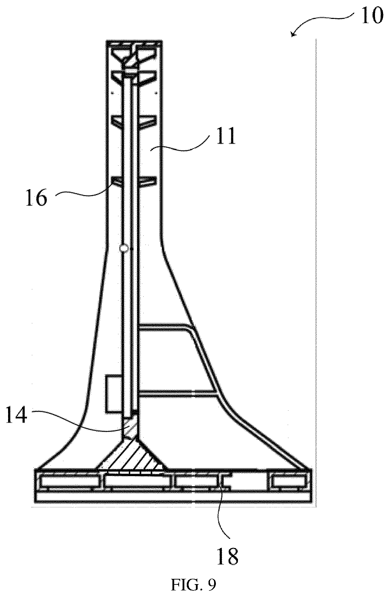

In a second embodiment shown in FIG. 9, the cross section of the connecting portion 14 is formed as an inverted T shape.

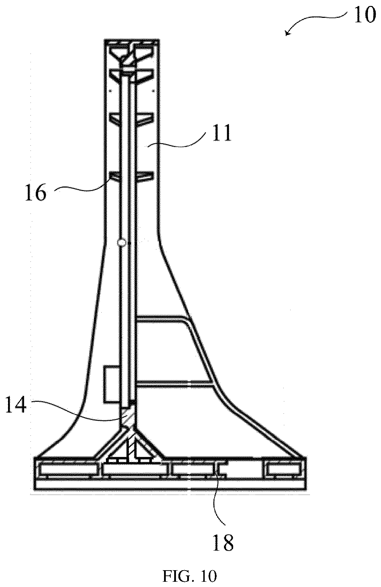

In a third embodiment shown in FIG. 10, the cross section of the connecting portion 14 is formed as an inverted tree branch shape. The connecting portion of the present disclosure is not limited to shapes of the cross section shown, and other shapes of the cross section may be set as needed.

As shown in FIG. 5, the support stand 10 also includes a first support plate 15. The first support plate 15 is arranged on a periphery of the main body portion 11 and extends outward in an axial direction of the main body portion 11. In the embodiment, the first support plate 15 may be disposed above the bearing mounting hole 12 and formed as a semicircle shape. Certainly, although the first support plate 15 has a semicircular shape as shown in FIG. 5, those skilled in the art may design the first support plate 15 into any other suitable shape as needed, such as an ellipse, etc.

As shown in FIG. 5, the support stand 10 also includes a plurality of first reinforcing ribs 16. The first reinforcing rib 16 may enhance the strength and stiffness of the support stand 10. In the embodiment, one side of each first reinforcing rib 16 is connected to a side surface of the first support plate 15, and a second side connected with the one side is connected to the main body portion 11.

In the illustrated embodiment, the plurality of first reinforcing ribs 16 are uniformly arranged in a circumference direction of the first support plate 15. Those skilled in the art may understand that the plurality of first reinforcing ribs are not necessarily uniformly arranged in the circumference direction of the first support plate 15, but may be arranged in other rules, such as arranged at a preset interval. In addition, the plurality of first reinforcing ribs may be formed as cross-shaped mesh ribs.

As shown in FIG. 5, the support stand 10 also includes a plurality of second reinforcing ribs 17. The second reinforcing rib 17 may improve the strength and stiffness of the support stand 10. Each second reinforcing rib 17 extends downward from an outer edge of the bearing mounting hole 12 to the pedestal 13 via the bottom portion of the main body portion 11 and the connecting portion 14. In the illustrated embodiment, the plurality of second reinforcing ribs 17 have a flat shape and are uniformly spaced from each other. The plurality of second reinforcing ribs may be formed as cross-shaped mesh ribs. However, the embodiments of the present disclosure are not limited to this, and those skilled in the art may make appropriate adjustments as needed.

As shown in FIG. 8 to FIG. 10, a plurality of third reinforcing ribs 18 are disposed inside the pedestal 13. The third reinforcing rib 18 may enhance the strength and stiffness of the support stand. In the illustrated embodiment, the third reinforcing rib 18 is formed as a cross shape.

In the embodiment, the support stand 10 may be manufactured by an integral cast forming, so that the main body portion and the pedestal are formed integrally. The method may reduce a traditional connection process between the support stand and the pedestal, thereby reducing a processing workload. The process may use a cast aluminum material, which may further reduce a weight of the support stand. In other embodiments, the process may use a cast iron material or other cast alloy materials.

Alternatively, the main body portion and the pedestal of the support stand may be manufactured as two separate parts, and then the two parts may be connected into one part. Alternatively, the support stand according to the embodiments of the present disclosure may also be made by welding.

As shown in FIG. 1 to FIG. 2, the CT detection device 100 also includes at least one pedestal extension section 40 assembled with the pedestal 13. The pedestal extension section 40 is matched with the pedestal 13 of the support stand 10 so as to jointly support the CT detection device 100.

As shown in FIG. 1 to FIG. 2, the CT detection device 100 also includes a channel component 70, and an object to be detected passes through the channel component to complete a detection process. As shown in FIG. 1 to FIG. 2, the channel component 70 includes a detection channel 50 and at least one transmission channel 60. The detection channel 50 is arranged in an installing space of the rotating frame 30. The object to be detected is irradiated by a detection radiation in the detection channel 50 and a returned radiation signal is received by the detector, so that the detection process is completed. The at least one transmission channel 60 is connected to and communicated with at least one of two ends of a base 51 of the detection channel 50, so that the detected object is allowed to be transmitted from the transmission channel to the detection channel, or from the detection channel to the transmission channel.

As shown in FIG. 1 to FIG. 4, the support stand 10 and the detection channel 50 in the embodiments of the present disclosure may be used in conjunction, so that a flexibility of the CT detection device may be improved. When a small object is required to be detected, it is only required to connect at least one of two ends of the support stand in the embodiment to the pedestal extension section, and correspondingly connect at least one of two ends of the detection channel to the transmission channel. In addition, when maintenance is required, the pedestal extension section and the transmission channel may be disconnected from the support stand and the detection channel, respectively, so that the maintenance may be carried out respectively, which may facilitate the use of users.

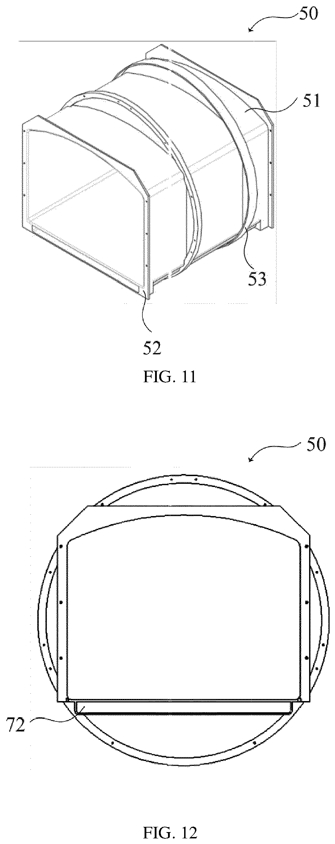

As shown in FIG. 11 to FIG. 15, the detection channel 50 includes the base 51 having two open ends, and the base 51 is configured to allow the object to be detected to pass through the detection channel 50. In the embodiment, the detection channel 50 is integrally formed by a carbon fiber composite material, which is beneficial to simplify an installation process of the channel. In addition, a new detection channel is allowed to be directly replaced in a case of a failure in the detection channel, so that a cost and time of maintenance may be reduced.

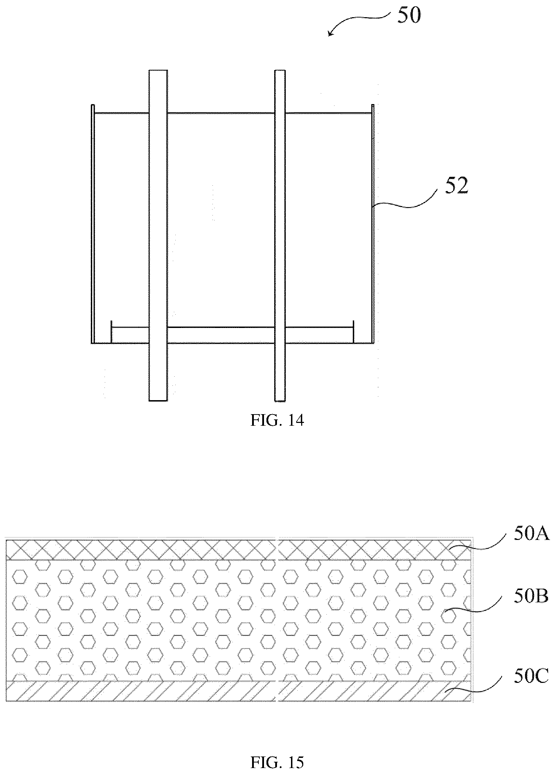

As shown in FIG. 15, the carbon fiber composite material include a carbon fiber layer 50A, an aramid honeycomb paper layer 50B and an aramid layer 50C that are laminated in sequence. The carbon fiber composite material has a good wear resistance and stiffness, and has an advantage of light weight.

As shown in FIG. 11, at least one of the two ends of the base 51 is provided with a connecting surface 52 which is configured to be connected to the transmission channel 60, so that a through channel component 70 is formed. In the embodiment, the connecting surface 52 includes a connecting hole (such as a screw hole) to fix the transmission channel 60 on the detection channel 50 through a connector (such as a screw).

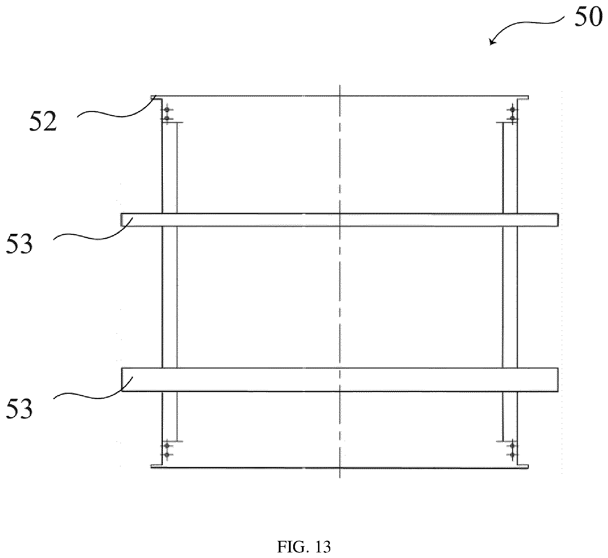

As shown in FIG. 11 and FIG. 13, an outer side of the base 51 is sleeved with at least one annular member 53 for installing a lead plate. In the embodiment, the outer side of the base 51 includes a region where the lead plate is not installed, so as to allow an incidence of the detection radiation from the region. As shown in the drawing, the region where the lead plate is not installed may be provided between two annular members 53. Certainly, adjustments may also be made by those skilled in the art according to actual needs.

As shown in FIG. 12, the channel component 70 also includes a transmission belt channel 72 which is located at bottom portions of the detection channel 50 and the transmission channel 60. The transmission belt channel 72 is configured for a transmission belt to pass through, so that the detected object is allowed to pass through the detection channel and the transmission channel.

Those skilled in the art may understand that the above-described embodiments are all exemplary, and modifications may be made by those skilled in the art. The structures described in the various embodiments may be freely combined without a conflict in structure or principle.

Although the present disclosure has been described with reference to the accompanying drawings, the embodiments disclosed in the accompanying drawings are intended to provide an exemplary description of preferred embodiments of the present disclosure, and may not be construed as limiting the present disclosure.

It should be noted that the word "including" does not exclude other elements or steps, and the word "a" or "an" does not exclude more than one. In addition, any reference numeral in the claims should not be construed as limiting the scope of the present disclosure.

## Claims

1. A support stand (10) configured to support a rotating frame (30) of a CT detection device (100), comprising:
a main body portion (11) comprising a bearing mounting hole (12), wherein a slip ring bearing (20) of the CT detection device (100) is arranged in the bearing mounting hole (12), and the rotating frame (30) is rotatably disposed in the slip ring bearing (20);
a pedestal (13) located at a bottom portion of the main body portion (11) and configured to support the main body portion (11); and
a connecting portion (14), wherein a width of a lower portion of a cross section of the connecting portion (14) is greater than a width of an upper portion of the cross section of the connecting portion (14), an upper portion of the connecting portion (14) is connected to the main body portion (11), and a lower portion of the connecting portion (14) is connected to the pedestal (13),
wherein the cross section of the connecting portion (14) is formed as a herringbone shape; and
wherein the support stand (10) further comprises a plurality of second reinforcing ribs (17), each second reinforcing rib extends downward from an outer edge of the bearing mounting hole (12) to the pedestal (13) via the bottom portion of the main body portion (11) and the connecting portion (14).

2. The support stand according to claim 1, further comprising:
a first support plate (15) arranged on a periphery of the main body portion (11) and extending outward in an axial direction of the main body portion (11); and
a plurality of first reinforcing ribs (16), wherein one side of each first reinforcing rib (16) is connected to a side surface of the first support plate (15), and the other side of each first reinforcing rib (16) connected with the one side is connected to the main body portion (11).

3. The support stand according to claim 2, wherein the first support plate (15) is disposed above the bearing mounting hole (12) and formed as a semicircle shape, and
wherein the plurality of first reinforcing ribs (16) are uniformly arranged in a circumferential direction of the first support plate (15).

4. The support stand according to claim 3, wherein a plurality of third reinforcing ribs (18) are disposed inside the pedestal (13), and the third reinforcing ribs (18) are formed as a cross shape.

5. The support stand according to claim 1, wherein the support stand (10) is manufactured by an integral cast forming; or
the main body portion (11) and the pedestal (13) are respectively manufactured as two separate parts, and the two parts are connected into one part.

6. A CT detection device (100), comprising:
a rotating frame (30) provided with a radiation source and a detector;
a slip ring bearing (20); and
the support stand according to any one of claims 1 to 5.

7. The CT detection device according to claim 6, further comprising:
at least one pedestal extension section (40) assembled with the pedestal (13) to jointly support the CT detection device (100).

## Patentansprüche

1. Ein Stützständer (10), der dazu ausgestaltet ist, einen Drehrahmen (30) einer CT-Detektionsvorrichtung (100) zu stützen, umfassend:
einen Hauptkörperabschnitt (11), umfassend ein Lagermontageloch (12), wobei ein Schleifringlager (20) der CT-Detektionsvorrichtung (100) in dem Lagermontageloch (12) angeordnet ist und der Drehrahmen (30) drehbar in dem Schleifringlager (20) angeordnet ist;
einen Sockel (13), der sich an einem unteren Abschnitt des Hauptkörperabschnitts (11) befindet und dazu ausgestaltet ist, den Hauptkörperabschnitt (11) zu stützen; und
einen Verbindungsabschnitt (14), wobei eine Breite eines unteren Abschnitts eines Querschnitts des Verbindungsabschnitts (14) größer ist als eine Breite eines oberen Abschnitts des Querschnitts des Verbindungsabschnitts (14), ein oberer Abschnitt des Verbindungsabschnitts (14) mit dem Hauptkörperabschnitt (11) verbunden ist und ein unterer Abschnitt des Verbindungsabschnitts (14) mit dem Sockel (13) verbunden ist,
wobei der Querschnitt des Verbindungsabschnitts (14) als eine Fischgrätenform ausgebildet ist; und
wobei der Stützständer (10) ferner eine Mehrzahl von zweiten Verstärkungsrippen (17) umfasst, wobei sich jede zweite Verstärkungsrippe von einem Außenrand des Lagermontagelochs (12) über den unteren Abschnitt des Hauptkörperabschnitts (11) und den Verbindungsabschnitt (14) nach unten zu dem Sockel (13) erstreckt.

2. Der Stützständer nach Anspruch 1, ferner umfassend:
eine erste Stützplatte (15), die an einem Umfang des Hauptkörperabschnitts (11) angeordnet ist und sich in einer axialen Richtung des Hauptkörperabschnitts (11) nach außen erstreckt; und
eine Mehrzahl von ersten Verstärkungsrippen (16), wobei eine Seite jeder ersten Verstärkungsrippe (16) mit einer Seitenfläche der ersten Stützplatte (15) verbunden ist und die andere Seite jeder ersten Verstärkungsrippe (16), die mit der einen Seite verbunden ist, mit dem Hauptkörperabschnitt (11) verbunden ist.

3. Der Stützständer nach Anspruch 2, wobei die erste Stützplatte (15) oberhalb des Lagermontagelochs (12) angeordnet und als eine Halbkreisform ausgebildet ist, und
wobei die Mehrzahl von ersten Verstärkungsrippen (16) gleichmäßig in einer Umfangsrichtung der ersten Stützplatte (15) angeordnet ist.

4. Der Stützständer nach Anspruch 3, wobei eine Mehrzahl von dritten Verstärkungsrippen (18) innerhalb des Sockels (13) angeordnet ist und die dritten Verstärkungsrippen (18) als eine Kreuzform ausgebildet sind.

5. Der Stützständer nach Anspruch 1, wobei der Stützständer (10) durch ein einstückiges Gussformen hergestellt ist; oder
der Hauptkörperabschnitt (11) und der Sockel (13) jeweils als zwei separate Teile hergestellt sind und die zwei Teile zu einem Teil verbunden sind.

6. Eine CT-Detektionsvorrichtung (100), umfassend:
einen Drehrahmen (30), der mit einer Strahlungsquelle und einem Detektor versehen ist;
ein Schleifringlager (20); und
den Stützständer nach einem der Ansprüche 1 bis 5.

7. Die CT-Detektionsvorrichtung nach Anspruch 6, ferner umfassend:
mindestens einen Sockelverlängerungsabschnitt (40), der mit dem Sockel (13) zusammengebaut ist, um gemeinsam die CT-Detektionsvorrichtung (100) zu stützen.

## Revendications

1. Un bâti de support (10) configuré pour supporter un châssis rotatif (30) d'un dispositif de détection CT (100), comprenant :
une partie de corps principal (11) comprenant un trou de montage de palier (12), dans lequel un palier à bague collectrice (20) du dispositif de détection CT (100) est agencé dans le trou de montage de palier (12), et le châssis rotatif (30) est disposé de manière rotative dans le palier à bague collectrice (20) ;
un socle (13) situé au niveau d'une partie inférieure de la partie de corps principal (11) et configuré pour supporter la partie de corps principal (11) ; et
une partie de liaison (14), dans lequel une largeur d'une partie inférieure d'une section transversale de la partie de liaison (14) est supérieure à une largeur d'une partie supérieure de la section transversale de la partie de liaison (14), une partie supérieure de la partie de liaison (14) est reliée à la partie de corps principal (11), et une partie inférieure de la partie de liaison (14) est reliée au socle (13),
dans lequel la section transversale de la partie de liaison (14) est formée en une forme de chevron ; et
dans lequel le bâti de support (10) comprend en outre une pluralité de deuxièmes nervures de renforcement (17), chaque deuxième nervure de renforcement s'étend vers le bas depuis un bord extérieur du trou de montage de palier (12) jusqu'au socle (13) via la partie inférieure de la partie de corps principal (11) et la partie de liaison (14).

2. Le bâti de support selon la revendication 1, comprenant en outre :
une première plaque de support (15) agencée sur une périphérie de la partie de corps principal (11) et s'étendant vers l'extérieur dans une direction axiale de la partie de corps principal (11) ; et
une pluralité de premières nervures de renforcement (16), dans lequel un côté de chaque première nervure de renforcement (16) est relié à une surface latérale de la première plaque de support (15), et l'autre côté de chaque première nervure de renforcement (16) relié audit un côté est relié à la partie de corps principal (11).

3. Le bâti de support selon la revendication 2, dans lequel la première plaque de support (15) est disposée au-dessus du trou de montage de palier (12) et formée en une forme de demi-cercle, et
dans lequel la pluralité de premières nervures de renforcement (16) sont agencées uniformément dans une direction circonférentielle de la première plaque de support (15).

4. Le bâti de support selon la revendication 3, dans lequel une pluralité de troisièmes nervures de renforcement (18) sont disposées à l'intérieur du socle (13), et les troisièmes nervures de renforcement (18) sont formées en une forme de croix.

5. Le bâti de support selon la revendication 1, dans lequel le bâti de support (10) est fabriqué par un moulage intégral ; ou
la partie de corps principal (11) et le socle (13) sont respectivement fabriqués comme deux pièces séparées, et les deux pièces sont reliées en une seule pièce.

6. Un dispositif de détection CT (100), comprenant :
un châssis rotatif (30) pourvu d'une source de rayonnement et d'un détecteur ;
un palier à bague collectrice (20) ; et
le bâti de support selon l'une quelconque des revendications 1 à 5.

7. Le dispositif de détection CT selon la revendication 6, comprenant en outre :
au moins une section d'extension de socle (40) assemblée avec le socle (13) pour supporter conjointement le dispositif de détection CT (100).
